# FASCICULE DE BREVET EUROPEEN

(11) **EP 0 438 342 B1**
(45) Date de publication et mention de la délivrance du brevet: **21.09.1994**
(21) Numéro de dépôt: 91400071.6
(22) Date de dépôt: 15.01.1991
(51) Int. Cl.: C03B 23/035, C03B 23/023

(54) **Procédé et dispositif d'obtention de feuilles de verre bombées**
Verfahren und Vorrichtung zum Biegen von Glasscheiben
Method and apparatus for bending glass sheets

(30) Priorité: 19.01.1990 FR 9000592
(43) Date de publication de la demande: 24.07.1991
(73) Titulaire: SAINT-GOBAIN VITRAGE INTERNATIONAL, 92400 Courbevoie (FR)
(72) Inventeur: Frenken, Heinz-Josef, W-5190 Stolberg (DE); Borger, Manfred, W-5100 Aachen (DE)
(74) Mandataire: Menes, Catherine

(56) Documents cités:
- EP-A- 0 312 439
- FR-A- 1 553 891
- FR-A- 1 559 723
- FR-A- 2 046 790
- FR-A- 2 085 464
- FR-A- 2 606 398
- US-A- 3 459 521
- US-A- 3 523 783

## Description

L'invention a trait aux techniques d'obtention de feuilles de verre bombées et éventuellement trempées utilisées notamment pour la production de vitrages automobiles de sécurité. Elle concerne plus spécialement celles de ces techniques dans lesquelles les feuilles de verre sont réchauffées à plat dans un four horizontal traversant, sont amenées par un convoyeur dans une station de bombage où elles sont stoppées sous un élément supérieur, sont soulevées et appliquées contre cet élément supérieur, puis sont relâchées sur un élément inférieur, par exemple du type cadre ouvert en son centre, le formage des feuilles de verre s'effectuant au moins pour partie sur cet élément inférieur, et sont finalement conduites dans une station de refroidissement notamment une station de trempe thermique.

Les techniques de bombage ci-dessus brièvement évoquées et dont on trouvera de nombreux exemples dans la littérature et notamment dans les publications de brevet EP-A-3 391, FR-B-2 085 464, EP-A-240 418, EP-B-241 355, US-A-4 682 997 ont toutes en commun l'utilisation d'un élément supérieur intervenant lors du transfert des feuilles de verre du convoyeur qui les a supportées au travers du four vers un élément inférieur qui constitue un outil de formage et/ou un outil de transfert des feuilles de verre jusqu'à la station de refroidissement. Généralement la surface de contact de l'élément supérieur avec la feuille de verre est recouverte d'un revêtement intercalaire. Ce revêtement intercalaire adoucit les contacts verre-élément supérieur notamment par un "gommage" des petites imperfections de l'état de surface de l'élément supérieur qui peuvent subsister même après un usinage soigné. De plus ce revêtement absorbe les poussières prises en sandwich entre l'élément supérieur et la feuille de verre et qui autrement laisseraient leur empreinte sur le verre relativement mou. Enfin ce revêtement évite que ne se forment des piqûres sur le verre chaud dues à la différence de nature des matériaux qui constituent l'élément supérieur (par exemple en acier réfractaire) et les feuilles traitées (par définition en verre).

De nombreux matériaux ont été utilisés comme revêtements. Les plus usités sont des tissus en fibres de verre ou des papiers à base de fibres de silice et/ou d'aluminium agglomérées par un liant minéral, ces revêtements présentant toutefois l'inconvénient de devoir être remplacés très fréquemment - surtout si les vitrages comportent de nombreuses zones émaillées qui provoquent des phénomènes de collage du vitrage, phénomènes inévitablement suivis de phénomènes de décollage accompagnés par l'arrachage par lambeaux du revêtement.

Par ailleurs, il a été tout récemment proposé des revêtements "longue durée" essentiellement à base de fibres métalliques. De la demande de brevet FR-A-2 606 398, il est ainsi connu un revêtement dont la surface de contact avec le verre est constituée d'un treillis de fils métalliques tricotés. D'autre part, de la demande de brevet EP-A-312 439, il est connu un tissu essentiellement métallique présentant une conductivité thermique de préférence inférieure à 0,2 WM⁻¹K⁻¹, formé de mèches d'une pluralité de fils élémentaires, disposées dans des directions différentes réalisant ensemble des mailles et interférant pour former des noeuds aux sommets des mailles grâce auxquels les mailles sont indéformables.

Ces derniers revêtements s'usent moins rapidement, même s'ils sont mis en contact avec des vitrages émaillés qui ont tendance à coller, cette tendance au collage étant essentiellement liée à la nature même des compositions d'émaillage. Toutefois, indépendamment des matériaux utilisés, les auteurs de la présente invention ont constaté que les vitrages émaillés ont une qualité optique moindre que celles de vitrages identiques en forme et en taille, mais non émaillés et ceci en raison même du principe de l'application contre un élément supérieur rigide.

Pour obvier ce problème il est connu des demandes de brevet EP-A-240 418 et EP-A-241 355 un procédé de bombage selon lequel la feuille de verre est soulevée et appliquée contre l'élément supérieur par une aspiration due à une dépression créée au voisinage de la périphérie de la feuille de verre, la face de l'élément supérieur tournée vers le convoyeur, contre laquelle vient s'appliquer la feuille de verre, étant avantageusement de dimensions moindres que celles de la face appliquée de la feuille de verre, de sorte que celle-ci déborde de l'élément supérieur. Il est ainsi possible de faire en sorte que les parties émaillées du vitrage - qui sont généralement situées le long des bords de manière à former une sorte d'encadrement - ne soient pas appliquées contre l'élément supérieur. Néanmoins, toutes les difficultés ne sont pas totalement obviées de cette manière.

En effet le long de la ligne de démarcation séparant la partie de la feuille de verre appliquée contre l'élément supérieur de sa partie non appliquée, on constate la présence de déformations qui se traduisent par des défauts optiques qui apparaissent après la trempe, les surfaces appliquées ne se comportant pas exactement comme les surfaces non appliquées, sans qu'il soit d'ailleurs parfaitement expliqué à quels mécanismes soient imputables ces différences de comportement.

La présente invention a pour but un procédé de bombage utilisant un élément supérieur polyvalent lors du transfert des feuilles de verre depuis le convoyeur qui les a transporté au travers du four dans lequel elles se sont réchauffées jusqu'à leur température de bombage vers un élément inférieur au moyen duquel s'effectue ou s'achève le formage des feuilles de verre; la polyvalence de l'élément supérieur étant conservée même si les feuilles de verre traitées présentent des zones émaillées plus ou moins larges le long de leurs bords et n'étant pas obtenue au prix d'un affaiblissement de la qualité optique des vitrages obtenus.

Conformément au préambule de la revendication 1, l'invention concerne un procédé de bombage d'une feuille de verre selon lequel la feuille de verre est réchauffée à plat dans un four horizontal traversant, est amenée par un convoyeur dans une station de bombage où elle est stoppée sous un élément supérieur dont la face tournée vers le convoyeur a des dimensions inférieures à celles de la feuille de verre est soulevée au-dessus de ce convoyeur et appliquée contre ledit élément supérieur par des forces de nature pneumatique, puis est relâchée sur un élément inférieur - le formage de la feuille de verre s'effectuant au moins pour partie sur cet élément inférieur - et est enfin conduite dans une station de refroidissement notamment de trempe thermique. Selon l'invention, et conformément à la partie caractéristique de la revendication 1, on applique les parties de la feuille de verre qui débordent de l'élément supérieur contre une étoffe souple dont les dimensions sont supérieures à celles de la feuille de verre et qui est tendue au contact de la face de l'élément supérieur tournée vers la feuille de verre et à l'extérieur de l'élément supérieur dans des directions tangentielles à la surface de l'élément supérieur dans ses zones marginales.

Si l'élément supérieur est bombé l'étoffe définit une sorte de grand élément supérieur dont la forme s'écarte très légerement de la forme parfaite car ses portions marginales sont obligatoirement droites. Toutefois les éléments supérieurs utilisés ont des rayons de courbure relativement grand de sorte que près des zones marginales leurs surfaces sont pratiquement confondues avec leurs surfaces tangentes et que cet écart est invisible sur le produit fini.

Le procédé de bombage selon l'invention est donc remarquable en ce que la feuille de verre est pour partie appliquée uniquement contre une étoffe souple sans que celle-ci ne soit en appui contre un élément supérieur rigide, cette étoffe souple faisant par ailleurs également office de revêtement pour sa partie en contact avec l'élément supérieur. Les forces pneumatiques d'application de la feuille de verre sont par exemple une aspiration due à une dépression créée à la périphérie de la feuille de verre ou une compression par un courant ascendant d'air chaud. Dans le cas d'une aspiration, l'air aspiré doit pouvoir passer au travers de la partie du revêtement qui déborde de l'élément supérieur, ce qui impose l'utilisation d'une étoffe perméable à l'air.

De manière particulièrement remarquable, on a constaté que la seule présence du revêtement souple suffit à uniformiser suffisamment le traitement que reçoivent toutes les parties constituant la feuille de verre y compris donc de sa partie périphérique, de sorte que la feuille de verre ne conserve finalement plus aucune trace du fait d'avoir reçu un tel traitement différencié et qu'aucun défaut optique consécutif à ce traitement n'apparaît après le refroidissement, notamment après le refroidissement par trempe thermique. D'autre part, la présence de ce revêtement souple débordant ne limite en rien les avantages attendus d'un élément supérieur de dimensions inférieures aux dimensions de la feuille de verre, à savoir sa polyvalence quelque soit la taille des feuilles de verre traitées et quelque soit la largeur éventuelle d'une bande périphérique émaillée formant par exemple un encadrement.

Il va de soi toutefois que dans le cas de vitrages émaillés on a tout particulièrement intérêt à choisir pour constituer l'étoffe un matériau plus spécialement bien adapté à un contact avec les compositions d'émaillage, ce qui est par exemple le cas d'un tissu essentiellement métallique dont la conductivité thermique est inférieure à 0,2 WM⁻¹K⁻¹, de préférence formé de mèches d'une pluralité de fils élémentaires, ces mèches étant disposées dans des directions différentes, réalisant ensemble des mailles et interférant pour former des noeuds au sommet des mailles. On peut également utilisé un feutre ou un tricot, sans liant, en fibres en alliage réfractaire d'un diamètre compris entre 8 ou 16 microns.

Avantageusement ce tissu, feutre ou tricot métallique est lui-même revêtu d'une couche céramique anti-collante, de côté tourné vers la feuille de verre, la couche en céramique étant par exemple une couche de dioxyde de zircone, d'oxynitrure d'aluminium, d'oxynitrure d'aluminium-silicium ou de titanate d'aluminium.

L'invention a également pour objet un dispositif de bombage d'une feuille de verre comportant un four horizontal traversant, un convoyeur acheminant la feuille de verre en travers de ce four et jusqu'à une station de bombage dans laquelle est suspendue un élément supérieur mobile verticalement au dessus dudit convoyeur, ledit élément supérieur ayant une face inférieure de dimensions plus réduites que celles de la feuille de verre, des moyens pneumatiques pour faire se soulever la feuille de verre et venir l'appliquer contre l'élément supérieur et un élément inférieur susceptible de recevoir la feuille de verre lorsque les moyens pneumatiques ne l'appliquent plus contre l'élément supérieur, la station de bombage comportant en outre des moyens de fixation d'une étoffe souple dont les dimensions sont supérieures à celles de la feuille de verre tendue à l'extérieur de l'élément supérieur dans des directions tangentielles à la surface de l'élément supérieur dans ses zones marginales.

Selon une variante de réalisation préférée la station de bombage comporte un caisson dépressurisé entourant l'élément supérieur plan ou très légèrement bombé avec sa concavité tournée vers le haut, la section d'ouverture du caisson étant de dimensions plus grandes que la feuille de verre et étant entièrement fermée par une étoffe souple perméable à l'air. La feuille de verre est ainsi aspirée au travers du revêtement souple qui doit pour cela présenter une perméabilité très importante pour ne pas perturber le mécanisme d'aspiration de la périphérie de la feuille de verre. Avantageusement l'étoffe est fixée au caisson par des attaches faisant ressort et peut être retirée de ces attaches en un temps aussi bref que possible afin de faciliter son remplacement.

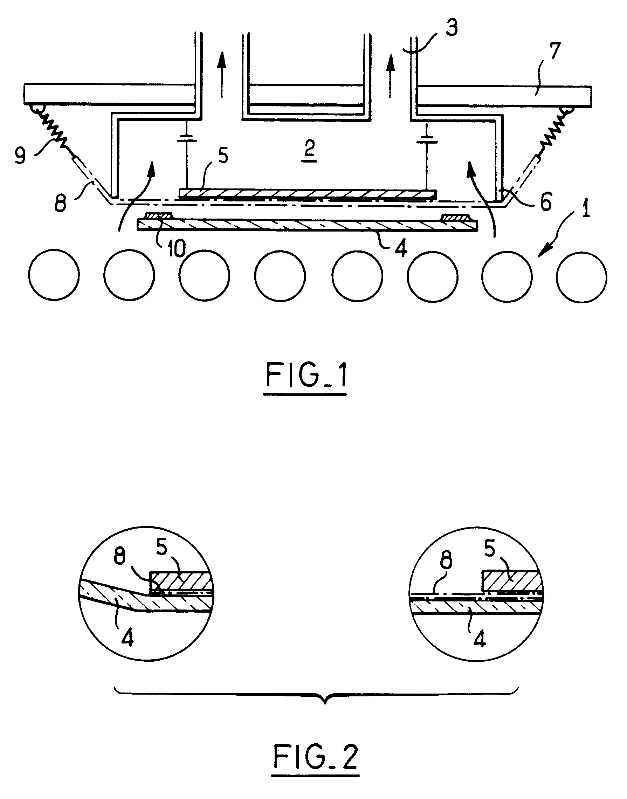

D'autres détails et caractéristiques avantageuses de l'invention ressortent de la description d'un mode de réalisation préféré de l'invention faite ci-après en référence aux dessins annexés qui représentent:
. **figure** 1: un schéma d'un élément supérieur entouré d'un caisson dépressurisé entièrement fermé par une étoffe souple,
. **figure** 2: deux schémas illustrant le comportement de la feuille de verre à la limite de l'élément supérieur.

La figure 1 est une vue très schématique d'une station de bombage selon l'invention qui vient s'inscrire de manière bien connue dans une installation de bombage qui comporte à la suite des uns des autres et dans l'ordre de passage pour une feuille de verre un poste de chargement des feuilles de verre sur un convoyeur, un four horizontal traversant dans lequel les feuilles de verre sont réchauffées à plat tout en étant véhiculées par le convoyeur et dont elles ressortent après avoir atteint une température égale à leur température de bombage et/ou de trempe, la station de bombage proprement dite dans laquelle la température des feuilles de verre est au moins maintenue constante et une station de refroidissement notamment par trempe thermique, des moyens étant de plus prévus pour le transfert des feuilles de verre de la station de bombage à la station de refroidissement.

Les feuilles de verre pénètrent dans la station de bombage par un convoyeur 1 par exemple constitué par une série de rouleaux moteurs.

La station de bombage comporte essentiellement un caisson 2 mis en connexion par des conduites 3 avec une chambre d'aspiration reliée à un dispositif d'aspiration de manière à créer une dépression au voisinage de la périphérie de la feuille de verre 4, de sorte que celle-ci soit soulevée au-dessus du convoyeur 1, état transitoire dans lequel on a choisi ici de la représenter. Dans ce caisson 2 sont montées des tiges de fixation auxquelles est suspendu un élément supérieur 5 ici constitué par une plaque, de préférence découpée dans une tôle assez épaisse en acier inoxydable. L'élément supérieur 5 est placé juste à la limite du caisson 2, c'est-à-dire que sa face inférieure est au niveau du plan horizontal défini par les extrémités inférieures 6 des parois verticales du caisson 2. Le caisson 2 - et avec lui l'élément supérieur 5 qui y est suspendu - est mobile verticalement ou plus précisément le bâti 7 sur lequel il est fixé, peut être déplacé entre deux positions extrêmes, une position basse où l'élément supérieur 5 n'est plus qu'à quelques millimètres au-dessus de la feuille de verre 4 sur le convoyeur 1 et une position haute telle que l'espace compris entre la feuille de verre 4 plaquée contre l'élément supérieur 5 et le convoyeur 1 soit d'une hauteur suffisante pour y faire pénétrer un élément inférieur qui récupère la feuille de verre dès que l'élément supérieur 5 la relâche.

Le fond du caisson 2 est fermé par une étoffe souple 8 qui est fixée par des attaches-ressorts 9 au bâti 7, en étant tendu à l'extérieur de l'élément supérieur 5 dans des directions tangentielles à la surface de l'élément supérieur 5 dans ses zones marginales. Comme le montre la figure 1, on choisit d'opérer selon l'invention avec un caisson 1 dont le fond soit de dimensions supérieures à celles des feuilles de verre traitées 4 alors que l'élément supérieur 5 est lui de dimensions nettement inférieures à celles des feuilles de verre. Avantageusement, les dimensions de l'élément supérieur 5 sont choisies telles que lorsque se présente une feuille de verre dont tout ou partie des bords sont recouverts d'une couche d'émaillage 10, cette couche 10 ne soit pas en regard de l'élément supérieur 5 mais uniquement du revêtement souple 8.

Après que la feuille de verre 4 ait été plaquée contre l'élément supérieur 5, celui-ci est remonté et on introduit sous la feuille de verre 4 un élément inférieur de préférence constitué par un cadre en forme, ouvert en son centre, dont la feuille de verre ramollie épouse la courbure sous l'effet de la gravité. Suivant l'acuité de la courbure qu'il est souhaité conférer à la feuille de verre, la feuille de verre est directement conduite à la station de refroidissement ou à une station intermédiaire de pressage contre une forme de bombage supérieure mâle pleine, l'élément inférieur en forme de cadre servant de forme femelle de pressage. Il est à noter qu'un tel pressage est alors éventuellement possible, car il se situe quelques secondes après que la feuille de verre ait pénétré dans la station de bombage et que ce bref laps de temps suffit pour que soit achevée la cuisson de certaines compositions d'émaillage.

La qualité optique des vitrages obtenus de cette façon est exceptionnelle et ceci quelques soient les positions relatives des bandes émaillées et de l'élément supérieur et bien que la feuille de verre soit appliquée sur toute sa surface contre l'étoffe; une hypothèse d'explication de cet état de fait très surprenant a pu être établie par les inventeurs à partir d'observations du mécanisme de formage, faites à partir d'une caméra à grande vitesse. Comme on le voit sur le schéma A de la figure 2, lorsque la feuille de verre vient s'appuyer contre un élément supérieur de taille plus réduite qu'elle-même, ses bords non soutenus ont une très légère tendance à continuer leur course verticale de sorte qu'il se forme un pli générateur de défauts optiques. Avec une étoffe débordant selon l'invention (schéma B) ce mouvement vers le haut des bords est interdit - sans pour autant que ces bords ne viennent buter contre un élément rigide, ce qui autrement dégraderait la bande émaillée.

Les revêtements métalliques développés comme matériau intercalaire de recouvrement de formes de bombage conviennent plus particulièrement à l'invention. Citons par exemple le matériau connu de la demande de brevet EP A 312 439 constitué par un tissu à base de fils métalliques du type acier inoxydable réfractaire, dont les fils élémentaires sont de préférence d'un diamètre inférieur à 10 microns, arrangés en mèches d'au moins 90 fils, disposées dans des directions différentes, de façon à réaliser des mailles de préférence carrées ayant à leurs sommets des noeuds les rendant indéformables. La taille des mailles étant choisie de manière à ce que la porosité à l'air soit de préférence supérieure à 95 %.

On peut également utiliser un feutre ou tricot conforme aux enseignements de la demande de brevet FR 89.03077 obtenu avec des fibres dont le diamètre est par exemple compris entre 8 et 16 microns et avantageusement de l'ordre de 12 microns, de préférence à base d'un alliage réfractaire au nickel ou d'un acier inoxydable, lesdites fibres étant assemblées sans liant ; le feutre ou le tricot ayant de préférence un grammage compris entre 300 et 900 g/m³ et sa porosité étant comprise entre 95 et 98 %.

Avantageusement, ce revêtement est lui-même recouvert par une couche de céramique anti-collante, c'est-à-dire contre laquelle la composition d'émaillage a relativement peu tendance à coller et choisie de préférence parmi le groupe de céramiques suivantes: dioxyde de zircone, oxynitrure d'aluminium, oxynitrure d'aluminium ou titanate d'aluminium.

## Revendications

1. Procédé de bombage d'une feuille de verre (4) selon lequel la feuille de verre est réchauffée à plat dans un four horizontal traversant, est amenée par un convoyeur (1) dans une station de bombage où elle est stoppée sous un élément supérieur (5) dont la face tournée vers le convoyeur (1) a des dimensions inférieures à celles de la feuille de verre (4), est soulevée au-dessus de ce convoyeur (1) et appliquée contre ledit élément supérieur (5) par des forces de nature pneumatique, puis est relâchée sur un élément inférieur - le formage de la feuille de verre (4) s'effectuant au moins pour partie sur cet élément inférieur - et est enfin conduite dans une station de refroidissement, notamment une station de trempe thermique, **caractérisé en ce qu**'on applique les parties de la feuille de verre (4) qui débordent de l'élément supérieur (5) contre une étoffe souple (8) dont les dimensions sont supérieures à celles de la feuille de verre (4) et qui est tendue au contact de la face de l'élément supérieur (5) tournée vers la feuille de verre (4) et à l'extérieur de l'élément supérieur (5) dans des directions tangentielles à la surface de l'élément supérieur (5) dans ses zones marginales.

2. Procédé de bombage d'une feuille de verre (4) selon la revendication 1, **caractérisé en ce que** l'application de la feuille de verre (4) est obtenue par une aspiration au travers du revêtement souple (8) due à une dépression créée à la périphérie de la feuille de verre (4).

3. Procédé de bombage d'une feuille de verre (4) selon la revendication 1, **caractérisé en ce que** l'application de la feuille de verre (4) est obtenue par un courant ascendant d'air chaud.

4. Procédé de bombage d'une feuille de verre (4) selon l'une des revendications 1 à 3, **caractérisé en ce que** l'élément supérieur (5) est plan.

5. Procédé de bombage d'une feuille de verre (4) selon l'une des revendications 1 à 3, **caractérisé en ce que** l'élément supérieur (5) a une face tournée vers le convoyeur (1) qui est convexe.

6. Procédé de bombage d'une feuille de verre (4) selon l'une des revendications 1 à 5, **caractérisé en ce que** ledit élément inférieur est un cadre de formage, ouvert en son centre, dont la forme correspond à la forme que l'on désire conférer à la feuille de verre (4).

7. Procédé de bombage d'une feuille de verre (4) selon la revendication 6, **caractérisé en ce que** ledit cadre sert également de forme femelle de pressage, la forme mâle étant constituée par une forme pleine disposée après l'élément supérieur (5).

8. Procédé de bombage d'une feuille de verre (4) selon l'une des revendications 1 à 7, **caractérisé en ce que** l'étoffe (8) a une porosité à l'air supérieure à 95 %.

9. Procédé de bombage d'une feuille de verre (4) selon la revendication 8, **caractérisé en ce que** l'étoffe (8) est constituée par un tissu essentiellement métallique dont la conductivité thermique est inférieure à 0,2 WM⁻¹K⁻¹.

10. Procédé de bombage d'une feuille de verre (4) selon la revendication 9, **caractérisé en ce que** le tissu (8) essentiellement métallique est formé de mèches d'une pluralité de fils élémentaires disposées dans des directions différentes réalisant ensemble des mailles et interférant pour former des noeuds aux sommets des mailles.

11. Procédé de bombage d'une feuille de verre (4) selon la revendication 8, **caractérisé en ce que** l'étoffe (8) est constituée d'un feutre ou d'un tricot de fibres en alliage réfractaire sans liant, d'un diamètre compris entre 8 et 16 microns.

12. Procédé de bombage d'une feuille de verre (4) selon la revendication 9, **caractérisé en ce que** l'étoffe (8) est revêtue d'une couche en céramique anti-collante.

13. Procédé de bombage d'une feuille de verre (4) selon la revendication 12, **caractérisé en ce que** ladite couche en céramique est choisie parmi le groupe de céramiques suivantes : dioxyde de zircone, oxynitrure aluminium-silicium, oxynitrure d'aluminium, titanate d'aluminium.

14. Dispositif de bombage d'une feuille de verre (4) comportant un four horizontal traversant, un convoyeur (1), une station de bombage dans laquelle est suspendue un élément supérieur (5) au-dessus du convoyeur (1), ledit élément supérieur (5) ayant une face inférieure de dimensions plus réduites que celles de la feuille de verre (4), des moyens pneumatiques (2, 3) pour faire se soulever la feuille de verre (4) et venir l'appliquer contre l'élément supérieur (5) et un élément inférieur susceptible de recevoir la feuille de verre (4) lorsque lesdits moyens pneumatiques ne l'appliquent plus contre l'élément supérieur (5), **caractérisé en ce que** la station de bombage comporte en outre des moyens de fixation (9) d'une étoffe souple (8), tendue au contact de la face de l'élément supérieur (5) tournée vers la feuille de verre (4) et à l'extérieur de l'élément supérieur (5) dans ses zones marginales.

15. Dispositif de bombage d'une feuille de verre (4) selon la revendication 14 dans lequel ledit élément supérieur (5) est monté dans un caisson dépressurisé (2), **caractérisé en ce que** lesdits moyens de fixation (9) sont constitués par des attaches à ressorts montées sur le caisson (2).

16. Dispositif de bombage d'une feuille de verre (4) selon la revendication 14 ou 15, **caractérisé en ce que** l'étoffe (8) est choisie parmi les matériaux ayant une porosité à l'air supérieure à 95 %.

17. Dispositif de bombage d'une feuille de verre (4) selon la revendication 17, **caractérisé en ce que** l'étoffe (8) est constituée par un tissu essentiellement métallique dont la conductivité thermique est inférieure à 0,2 WM⁻¹K⁻¹.

18. Dispositif de bombage d'une feuille de verre (4) selon la revendication 17, **caractérisé en ce que** le tissu (8) essentiellement métallique est formé de mèches d'une pluralité de fils élémentaires disposées dans des directions différentes réalisant ensemble des mailles et interférant pour former des noeuds aux sommets des mailles.

19. Dispositif de bombage d'une feuille de verre (4) selon la revendication 17, **caractérisé en ce que** l'étoffe (8) est constituée d'un feutre ou d'un tricot de fibres en alliage réfractaire sans liant, d'un diamètre compris entre 8 et 16 microns.

20. Dispositif de bombage d'une feuille de verre (4) selon la revendication 19, **caractérisé en ce que** l'étoffe (8) est revêtue d'une couche en céramique anti-collante.

21. Dispositif de bombage d'une feuille de verre (4) selon la revendication 20, **caractérisé en ce que** ladite couche en céramique est choisie parmi le groupe de céramiques suivantes : dioxyde de zircone, oxynitrure aluminium-silicium, oxynitrure d'aluminium, titanate d'aluminium.

## Claims

1. Method of bending a glass sheet (4), according to which the glass sheet is reheated flat in a horizontal straight-through furnace, is brought by a conveyor (1) into a bending station where it is stopped beneath an upper element (5), the face of which towards the conveyor (1) has dimensions smaller than those of the glass sheet (4), is raised above this conveyor (1) and is applied against said upper element (5) by forces of a pneumatic nature, then is released onto a lower element - the shaping of the glass sheet (4) being carried out at least partly on this lower element - and is finally conducted into a cooling station, notably thermal toughening station, characterized in that the parts of the glass sheet (4) which project beyond the upper element (5) are applied against a flexible fabric (8), the dimensions of which are greater than the dimensions of the glass sheet (4) and which is tightened into contact with the face of the upper element (5) which is towards the glass sheet (4) and outside the upper element (5) in directions tangential to the surface of the upper element (5) in its marginal zones.

2. Method of bending a glass sheet (4) according to Claim 1, characterized in that the application of the glass sheet (4) is produced by a suction through the flexible covering (8) due to a reduced pressure created at the periphery of the glass sheet (4).

3. Method of bending a glass sheet (4) according to Claim 1, characterized in that the application of the glass sheet (4) is produced by an ascending current of hot air.

4. Method of bending a glass sheet (4) according to one of Claims 1 to 3, characterized in that the upper element (5) is plane.

5. Method of bending a glass sheet (4) according to one of Claims 1 to 3, characterized in that the upper element (5) has a face towards the conveyor (1) which is convex.

6. Method of bending a glass sheet (4) according to one of Claims 1 to 5, characterized in that said lower element is a shaping frame, open at its centre, the shape of which corresponds to the shape that it is desired to give to the glass sheet (4).

7. Method of bending a glass sheet (4) according to Claim 6, characterized in that said frame serves also as female pressing mould, the male mould being formed of a solid mould disposed after the upper element (5).

8. Method of bending a glass sheet (4) according to one of Claims 1 to 7, characterized in that the fabric (8) has a porosity to air greater than 95%.

9. Method of bending a glass sheet (4) according to Claim 8, characterized in that the fabric (8) is constituted of an essentially metallic cloth, the thermal conductivity of which is less than 0.2 WM⁻¹K⁻¹.

10. Method of bending a glass sheet (4) according to Claim 9, characterized in that the essentially metallic cloth (8) is formed of rovings of a plurality of elementary threads, disposed in different directions and together forming stitches and interfering to form knots at the ends of the stitches.

11. Method of bending a glass sheet (4) according to Claim 8, characterized in that the fabric (8) is formed of a felt or a knitted fabric of refractory alloy fibres without binder, of a diameter between 8 and 16 microns.

12. Method of bending a glass sheet (4) according to Claim 9, characterized in that the fabric (8) is coated with a layer of antistick ceramic.

13. Method of bending a glass sheet (4) according to Claim 12, characterized in that said layer of ceramic is chosen from among the group of the following ceramics: zirconium dioxide, aluminium-silicon oxynitride, aluminium oxynitride, aluminium titanate.

14. Device for bending a glass sheet (4), comprising a horizontal straight-through furnace, a conveyor (1), a bending station in which an upper element (5) is suspended above the conveyor (1), said upper element (5) having a lower face of dimensions smaller than those of the glass sheet (4), pneumatic means (2, 3) for causing the glass sheet (4) to rise and to apply it against the upper element (5), and a lower element capable of receiving the glass sheet (4) when said pneumatic means no longer apply it against the upper element (5), characterized in that the bending station comprises, in addition, fixing means (9) for a flexible fabric (8), tightened into contact with the face of the upper element (5) that is towards the glass sheet (4) and outside the upper element (5) in its marginal zones.

15. Device for bending a glass sheet (4) according to Claim 14, in which said upper element (5) is mounted in a sub-atmospheric box (2), characterized in that said fixing means (9) are constituted of spring connectors mounted on the box (2).

16. Device for bending a glass sheet (4) according to Claim 14 or 15, characterized in that the fabric (8) is chosen from among the materials that have a porosity to air greater than 95%.

17. Device for bending a glass sheet (4) according to Claim 17, characterized in that the fabric (8) is constituted of an essentially metallic cloth, the thermal conductivity of which is less than 0.2 WM⁻¹K⁻¹.

18. Device for bending a glass sheet (4) according to Claim 17, characterized in that the essentially metallic cloth (8) is formed of rovings of a plurality of elementary threads disposed in different directions and together creating stitches and interfering to form knots at the ends of the stitches.

19. Device for bending a glass sheet (4) according to Claim 17, characterized in that the fabric (8) is constituted of a felt or a knitted fabric of refractory alloy fibres without binder, of a diameter between 8 and 16 microns.

20. Device for bending a glass sheet (4) according to Claim 19, characterized in that the fabric (8) is coated with an anti-stick ceramic layer.

21. Device for bending a glass sheet (4) according to Claim 20, characterized in that said ceramic layer is chosen from among the group of the following ceramics: zirconium dioxide, aluminium-silicon oxynitride, aluminium oxynitride, aluminium titanate.

## Patentansprüche

1. Verfahren zur Biegung einer Glasscheibe (4), gemäß welchem die Glasscheibe eben in einem horizontalen Durchlaufofen aufgeheizt wird, von einem Förderer (1) in eine Biegestation mitgenommen wird, wo sie unter einem Oberelement (5) angehalten wird, dessen zum Förderer (1) gekehrte Seite geringere Abmessungen aufweist als diejenige der Glasscheibe (4), vom Förderer (1) angehoben wird und gegen das Oberelement (5) durch pneumatische Kräfte angelegt wird, dann auf ein Unterelement abgegeben wird - die Formung der Glasscheibe (4) vollzieht sich mindestens zum Teil auf diesem Unterelement - und endlich in eine Kühlstation geleitet wird, insbesondere eine Station für thermische Abschreckung, **dadurch gekennzeichnet**, daß die Teile der Glasscheibe (4), welche über das Oberelement (5) hinausstehen, gegen ein nachgiebiges gewebeartiges Element (8) angelegt werden, dessen Abmessungen größer sind als diejenigen der Glasscheibe (4) und der in Kontakt gehalten wird mit der Fläche des Oberelements (5), welche gegen die Glasscheibe (4) gerichtet ist, und außerhalb des Oberelements (5) in Richtungen gehalten ist, die tangential zur Oberfläche des Oberelementes (5) in seinen Randzonen liegen.

2. Verfahren zum Biegen einer Glasscheibe (4) nach Anspruch 1, **dadurch gekennzeichnet**, daß die Anlegung der Glasscheibe (4) mittels Ansaugen durch die nachgiebige Lage (8) aufgrund eines Unterdruckes erfolgt, welcher im Randbereich der Glasscheibe (4) erzeugt wird.

3. Verfahren zum Biegen einer Glasscheibe (4) nach Anspruch 1, **dadurch gekennzeichnet**, daß die Anlegung der Glasscheibe (4) durch einen aufsteigenden, Warmluftstrom erzielt wird.

4. Verfahren zum Biegen einer Glasscheibe (4) nach einem der Ansprüche 1-3, **dadurch gekennzeichnet**, daß das Oberelement (5) plan ist.

5. Verfahren zum Biegen einer Glasscheibe (4) nach einem der Ansprüche 1-3, **dadurch gekennzeichnet**, daß das Oberelement (5) eine konvexe Seite aufweist, die gegen den Förderer (1) gewendet ist.

6. Verfahren zum Biegen einer Glasscheibe (4) gemäß einem der Ansprüche 1-5, **dadurch gekennzeichnet**, daß das Unterelement ein Formrahmen ist, der offen ist in seiner Mitte und dessen Form der Form entspricht, die man der Glasscheibe (4) geben möchte.

7. Verfahren zum Biegen einer Glasscheibe (4) gemäß Anspruch 6, **dadurch gekennzeichnet**, daß der Rahmen ebenso eine Preßmatrize aufweist, wobei die Patrize durch eine Vollform gegeben ist, die nach dem Oberelement (5) angeordnet ist.

8. Verfahren zum Biegen einer Glasscheibe (4) gemäß einem der Ansprüche 1-7, **dadurch gekennzeichnet**, daß das Gewebe (8) eine Porösität für Luft größer als 95% aufweist.

9. Verfahren zum Biegen einer Glasscheibe (4) gemäß Anspruch 8, **dadurch gekennzeichnet**, daß das Gewebe (8) aus einem im wesentlichen metallischen Gewebe besteht, dessen thermische Leitfähigkeit kleiner als 0,2 WM⁻¹K⁻¹ ist.

10. Verfahren zum Biegen einer Glasscheibe (4) gemäß Anspruch 9, **dadurch gekennzeichnet**, daß das im wesentlichen metallische Gewebe (8) aus Fadenmaterial mit einer Anzahl von Einzelfäden gebildet ist, welche in verschiedene Richtungen angeordnet sind, die zusammen Maschen bilden und sich überschneiden, um Knoten an den Spitzen der Maschen zu bilden.

11. Verfahren zum Biegen einer Glasscheibe (4) gemäß Anspruch (8), **dadurch gekennzeichnet**, daß das Gewebe aus einem Filz oder einem Gewebe von Fasern aus feuerfester Verbindung ohne Bindemittel gebildet wird, dessen Durchmesser zwischen 8 und 16 Mikron liegt.

12. Verfahren zum Biegen einer Glasscheibe (4) nach Anspruch, **dadurch gekennzeichnet**, daß das Gewebe (8) mit einer antihaftenden Keramikschicht beschichtet ist.

13. Verfahren zum Biegen einer Glasscheibe (4) nach Anspruch 12, dadurch gekennzeichnet, daß die Keramikschicht unter den folgenden Keramikgruppen gewählt ist: Zirkondioxid, Aluminium-Silizium-Oxinitrit, Aluminium-Oxinitrit, Aluminium-Titanat.

14. Vorrichtung zum Biegen einer Glasscheibe (4) umfaßend einen horizontalen Durchgangsofen, einen Förderer (1), eine Biegestation, in welcher ein Oberelement (5) über dem Förderer (1) hängt, wobei dieses Oberelement eine untere Fläche mit Abmessungen kleiner als diejenigen der Glasscheibe (4) aufweist, pneumatische Einrichtung (2,3) zum Anheben der Glasscheibe (4) und Anlegen gegen das Oberelement (5) und ein Unterelement zum Aufnehmen der Glasscheibe (4), wenn die pneumatische Einrichtung diese nicht mehr gegen das Oberelement (5) anliegt, **dadurch gekennzeichnet**, daß die Biegestation außerdem umfaßt eine Befestigungseinrichtung (9) für ein biegsames Gewebe (8), welches in Kontakt mit der Fläche des Oberelementes (5) steht, welche gegen die Glasscheibe (4) gewendet ist, und außerhalb des Oberelementes (5) in seinen Randzonen gehalten wird.

15. Vorrichtung zum Biegen einer Glasscheibe (4) nach Anspruch 14, in welcher das Oberelement (5) in einem Unterdruckkasten (2) vorgesehen ist, **dadurch gekennzeichnet**, daß die Befestigungseinrichtung (9) Federverbinder umfaßt, die an dem Kasten (2) befestigt sind.

16. Vorrichtung zum Biegen einer Glasscheibe (4) nach Anspruch 14 oder 15, **dadurch gekennzeichnet**, daß das Gewebe (8) aus Material gewählt ist, das eine Porösität für Luft größer als 95% aufweist.

17. Vorrichtungen zur Biegung einer Glasscheibe (4) nach Anspruch 16, dadurch gekennzeichnet, daß das Gewebe (8) aus einem im wesentlichen metallischen Gewebe besteht, dessen thermische Leitfähigkeit kleiner als 0,2 WM⁻¹K⁻¹ ist.

18. Vorrichtungen zum Biegen einer Glasscheibe (4) nach Anspruch 17, **dadurch gekennzeichnet**, daß das im wesentlichen metallische Gewebe aus Fadenmaterial mit einer Anzahl von Einzelfäden gebildet ist, welche in verschiedene Richtungen angeordnet sind, die zusammen Maschen bilden und sich überschneiden, um Knoten an den Spitzen der Maschen zu bilden.

19. Vorrichtung zur Biegung einer Glasscheibe (4) nach Anspruch 17, **dadurch gekennzeichnet**, daß das Gewebe (8) aus einem Filz oder einem Gewebe von Fasern aus feuerfester Verbindung ohne Bindemittel gebildet wird, dessen Durchmesser zwischen 8 und 16 Mikron liegt.

20. Vorrichtung zum Biegen einer Glasscheibe (4) nach Anspruch 19, **dadurch gekennzeichnet**, daß das Gewebe (8) mit einer antihaftenden Keramikschicht beschichtet ist.

21. Vorrichtung zum Biegen einer Glasscheibe (4) nach Anspruch 20, **dadurch gekennzeichnet**, daß die Keramikschicht unter den folgenden Keramikgruppen gewählt ist: Zirkondioxid, Aluminium-Silizium-Oxinitrit, Aluminium-Oxinitrit, Aluminium-Titanat.
